# EUROPEAN PATENT APPLICATION

(11) **EP 4 632 883 A1**
(43) Date of publication of application: **15.10.2025**
(21) Application number: 24218586.6
(22) Date of filing: 10.12.2024
(51) Int. Cl.: H01M 50/105, B29C 53/36, H01M 10/02

(54) **SECONDARY BATTERY**

(30) Priority: 09.04.2024 KR 20240047707
(71) Applicant: Samsung SDI Co., Ltd., Yongin-si, Gyeonggi-do 17084 (KR)
(72) Inventor: Baek, Moo Ryong, 17084 Yongin-si, Gyeonggi-do (KR)
(74) Representative: Gulde & Partner

(57) **Abstract**

A secondary battery is provided with secure insulation and no increased thickness. The secondary battery includes an electrode assembly, a pouch-type case accommodating the electrode assembly, a first tape attached to a side portion of the case, and a second tape attached to an upper portion of the case. The first tape and the second tape are formed so as to not overlap in a region corresponding to an upper corner of the case.

## Description

### BACKGROUND

### 1. Field

The present disclosure relates to a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

The invention is defined by the appended claims. The description that follows is subjected to this limitation. Any disclosure lying outside the scope of said claims is only intended for illustrative as well as comparative purposes. The present disclosure provides a secondary battery that is not thicker over and securing insulation.

These and other aspects and features of the present disclosure will be described in or will be apparent from the following description of embodiments of the present disclosure.

A secondary battery according to one embodiment of the present disclosure includes an electrode assembly; a pouch-type case accommodating the electrode assembly; a first tape attached to a side portion of the case; and a second tape attached to an upper portion of the case, wherein the first tape and the second tape do not overlap in part in a first region corresponding to an upper corner of the case.

The first tape may extend along the side portion of the case with a constant width and decrease in the width in the region.

The case may include a wide and flat front surface, a narrow and flat side surface, and a transition portion connecting the front surface and the side surface, and the first tape and the second tape may not overlap in the region on the front surface of the case.

The case may include a wide and flat front surface, a narrow and flat side surface, and a transition portion connecting the front surface and the side surface, and the first tape and the second tape may overlap in the region on the transition portion of the case.

The case may include a wide and flat front surface, a narrow and flat side surface, and a transition portion connecting the front surface and the side surface, and the first tape and the second tape may to overlap in the region on the transition portion and the side surface of the case.

The case may include a wide and flat front surface, a narrow and flat side surface, and a transition portion connecting the front surface and the side surface, and the first tape may include (i) a first section located in the region and formed throughout the transition portion and the side surface of the case and (ii) a second section located outside the region and formed throughout the front surface, the transition portion, and the side surface of the case.

The first section and the second section of the first tape may be integrally formed.

The second tape may extend with a width corresponding to a length of the first section of the first tape.

A partial sub-section of the second section of the first tape adjacent to the first section may be formed only in the transition portion and the side surface of the case.

The partial sub-section of the second section of the first tape adjacent to the first section may be formed so that a width of the partial sub-section may gradually decrease toward the first section of the first tape.

The partial sub-section of the first tape may have a length of 1 to 3 times a width of the transition portion of the case.

The first tape may be formed to extend along the side portion of the case with a constant width and decrease in the width in the region, and the second tape may be formed to extend along the upper portion of the case with a constant width and then decrease in the width in the region.

The case may include a wide and flat front surface, a narrow and flat side surface, and a transition portion connecting the front surface and the side surface, and the region may be within 10% of an overall length of the front surface of the case.

The case may include a wide and flat front surface, a narrow and flat side surface, and a transition portion connecting the front surface and the side surface, and the second tape may extend over the front surface of the case and terminate at the transition portion of the case.

The case may include a wide and flat front surface, a narrow and flat side surface, and a transition portion connecting the front surface and the side surface, and the second tape may extend over the front surface and the transition portion of the case and terminate at the side surface of the case.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a front view illustrating a secondary battery according to a first embodiment of the present disclosure;
FIG. 2 is an enlarged view in which portion II in FIG. 1 is enlarged;
FIG. 3 is a view illustrating a case in which a second tape is removed in FIG. 1;
FIG. 4 is an exploded view illustrating an internal structure of the secondary battery according to the first embodiment of the present disclosure;
FIG. 5 is a view illustrating a secondary battery according to a second embodiment of the present disclosure, and illustrates a portion corresponding to FIG. 2;
FIG. 6 is a view illustrating a secondary battery according to a third embodiment of the present disclosure, and illustrates a portion corresponding to FIG. 2; and
FIG. 7 is a view illustrating a secondary battery according to a fourth embodiment of the present disclosure, and illustrates a portion corresponding to FIG. 2.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

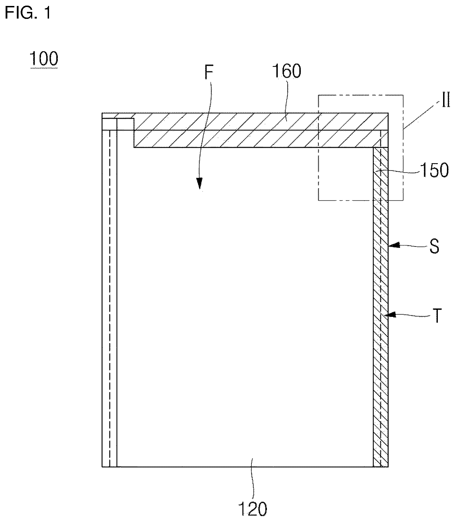

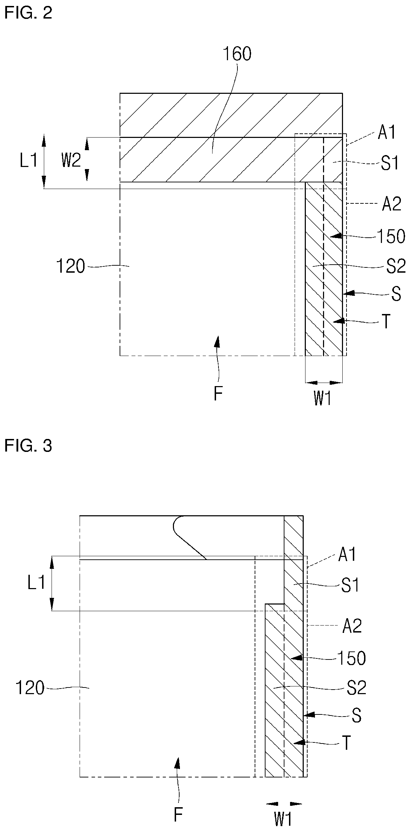

FIG. 1 is a front view illustrating a secondary battery 100 according to a first embodiment of the present disclosure, FIG. 2 is an enlarged view in which portion II in FIG. 1 is enlarged, and FIG. 3 is a view illustrating a case in which a second tape 160 is removed in FIG. 1.

The secondary battery 100 according to the first embodiment of the present disclosure includes an electrode assembly 110, a case 120, a first electrode lead 130, a second electrode lead 140, a first tape 150, and a second tape 160.

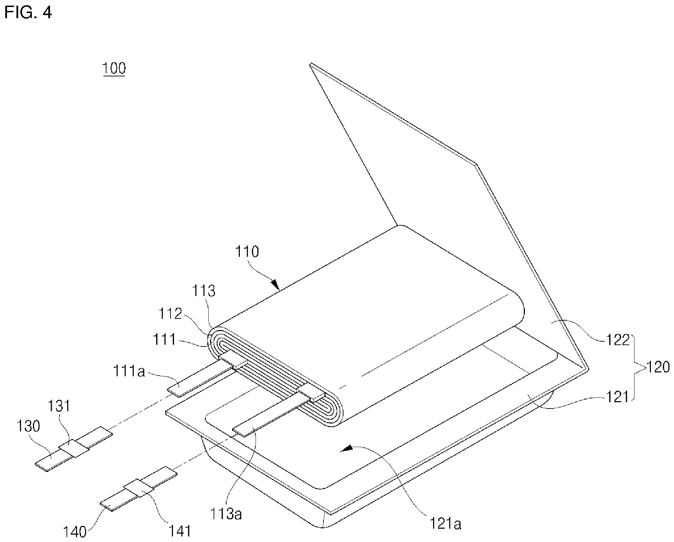

FIGS. 1 to 3 illustrate only an exterior of the secondary battery 100 according to the first embodiment of the present disclosure, and the electrode assembly 110, the first electrode lead 130, the second electrode lead 140, and the like are not shown. Accordingly, an internal structure of the secondary battery 100 according to the first embodiment of the present disclosure with the electrode assembly 110, the first electrode lead 130, the second electrode lead 140, and the like will be briefly described first with reference to FIG. 4.

FIG. 4 is an exploded view illustrating the internal structure of the secondary battery 100 according to the first embodiment of the present disclosure, and the first tape 150 and the second tape 160 are omitted.

Referring to FIG. 4, an electrode assembly 110 may be formed by winding or stacking a stack of a first electrode plate 111, a separator 112, and a second electrode plate 113, which are formed as thin plates or films. When the electrode assembly 110 is a wound stack, a winding axis may be parallel to the longitudinal direction of the case 120. In other embodiments, the electrode assembly 110 may be a stack type rather than a winding type, and the shape of the electrode assembly 110 is not limited in the present disclosure. In addition, the electrode assembly 110 may be a Z-stack electrode assembly in which a first electrode plate 111 and a second electrode plate 113 are inserted into both sides of a separator 112, which is then bent into a Z-stack. In addition, one or more electrode assemblies 110 may be stacked such that long sides of the electrode assemblies 110 are adjacent to each other and accommodated in the case 120, and the number of electrode assemblies 110 in the case 120 is not limited in the present disclosure. The first electrode plate 111 of the electrode assembly 110 may act as a negative electrode, and the second electrode plate 112 may act as a positive electrode. Of course, the reverse is also possible.

The first electrode plate 111 may be formed by applying a first electrode active material, such as graphite or carbon, to a first electrode current collector formed of a metal foil, such as copper, a copper alloy, nickel, or a nickel alloy. The first electrode plate may include a first electrode tab (e.g., a first uncoated portion) 111a that is a region to which the first electrode active material is not applied. The first electrode tab 111a may act as a current flow path between the first electrode plate 111 and the first electrode lead 130. In some embodiments, when the first electrode plate 111a is manufactured, the first electrode tab 111a may be formed by being cut in advance to protrude to one side of the electrode assembly 110, or the first electrode tab 111a may protrude to one side of the electrode assembly 110 more than (e.g., farther than or beyond) the separator 112 without being separately cut.

The second electrode plate 113 may be formed by applying a second electrode active material, such as a transition metal oxide, on a second electrode current collector formed of a metal foil, such as aluminum or an aluminum alloy. The second electrode plate 113 may include a second electrode tab (e.g., a second uncoated portion) 113a that is a region to which the second electrode active material is not applied. The second electrode tab 113a may act as a current flow path between the second electrode plate 113 and the second electrode lead 140. In some embodiments, the second electrode tab 113a may be formed by being cut in advance to protrude to the other side (e.g., the opposite side) of the electrode assembly 110 when the second electrode plate 113 is manufactured, or the second electrode tab 113a may protrude to the other side of the electrode assembly 110 more than (e.g., farther than or beyond) the separator 112 without being separately cut.

In some embodiments, the first electrode tab 111a may be located on the left side of the electrode assembly 110, and the second electrode tab 113a may be located on the right side of the electrode assembly 110. In other embodiments, the first electrode tab 111a and the second electrode tab 113a may be located on one side of the electrode assembly 110 in the same direction. Here, for convenience of description, the left and right sides are defined according to the secondary battery 100 as oriented in the drawings, and the positions thereof may change when the secondary battery 100 is rotated left and right or up and down.

In some embodiments, the electrode assembly 110 may be accommodated in the case 120 along with an electrolyte.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}Dₐ (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

The case 120 is formed in a so-called pouch-type and accommodates the electrode assembly 110. More specifically, the case 120 includes a first pouch member 121 formed with a concave inner space 121a to accommodate the electrode assembly 110, and a second pouch member 122 formed substantially flat to cover the first pouch member 121.

The first pouch member 121 may be formed with the concave inner space 121a by performing a forming process wherein a punch is applied in a center portion of a substantially flat sheet and then fixing edges. It is preferable that corners of the punch be formed as curved surfaces to prevent stress concentration near the corners. Accordingly, the inner space 121a has a substantially flat bottom surface (corresponding to "a front surface F of the case 120" to be described below), a substantially flat inner side surface (corresponding to "a side surface S of the case 120" to be described below), and a transition portion forming a curved surface between the bottom surface and the inner side surface (corresponding to "a transition portion T of the case 120" to be described below).

The first pouch member 121 and the second pouch member 122 may be manufactured separately or integrally and may be foldably connected at the bottom. The latter case is exemplified in FIG 4. Further, the first pouch member 121 and the second pouch member 122 may be bonded along the edges. These portions may be referred to as "terrace portions," and the terrace portions at both sides may be folded at roughly 90° toward the first pouch member 121 to save space after bonding.

The first electrode lead 130 is drawn out from the first electrode plate 111 of the electrode assembly 110 to an upper side of the case 120 between the first pouch member 121 and the second pouch member 122. In the first electrode lead 130, an insulating member 131 may be provided at a portion in contact with the case 120 to prevent an electrical short circuit with the case 120.

The second electrode lead 140 is drawn out from the second electrode plate 113 of the electrode assembly 110 to an upper end of the case 120 between the first pouch member 121 and the second pouch member 122. In the second electrode lead 140, an insulating member 141 may be provided at a portion in contact with the case 120 to prevent an electrical short circuit with the case 120.

The first tape 150 and the second tape 160 will be described with reference to FIGS. 1 to 3.

For reference, FIG. 1 is a view of the first pouch member 121 from the front, in which the first tape 150 is attached thereto while the terrace portions at both sides are folded at roughly 90° toward the first pouch member 121, and the second tape 160 is attached thereto while the first electrode lead 130 and the second electrode lead 140 are aligned to be connected to a protection circuit module (PCM, not shown).

Hereinafter, based on FIG. 1, a relatively wide and substantially flat portion viewable from the front is referred to as "the front surface F of the case 120," a relatively narrow and substantially flat portion located on the side surface is referred to as "the side surface S of the case 120," and a portion forming a curved surface between the front surface F and the side surface S of the case 120 is referred to as "the transition portion T of the case 120."

Further, for convenience of understanding, hatching is indicated on each of the first tape 150 and the second tape 160. The first tape 150 is attached to a side portion of the case 120 to structurally fix the side portion of the case 120 and serves to electrically insulate the side portion of the case 120 from outside of the case 120. The second tape 160 is attached to an upper portion of the case 120 to structurally fix the upper portion of the case 120 and serves to electrically insulate the upper portion of the case 120 from outside of the case 120.

In the secondary battery 100 according to the first embodiment of the present disclosure, the second tape 160 may extend along the entirety of the upper portion of the case 120 with a substantially constant width.

When the first tape 150 and the second tape 160 overlap in a region corresponding to an upper corner of the case 120, an overall thickness of the secondary battery 100 increases as much as a thickness of the tape. The increased thickness may be disadvantageous in terms of compact design. Accordingly, in order to solve this problem, in the secondary battery 100 according to the first embodiment of the present disclosure, an overlap avoidance configuration is applied to the first tape 150 in the region corresponding to the upper corner of the case 120.

Here, the region corresponding to the upper corner of the case 120 may be, for example, a region within roughly 10% of an overall length of the front surface F of the case 120 from an upper end of the front surface F of the case 120, in the side portion of the case 120. Hereinafter, for convenience of description, this region will be referred to as "a first region A1" and the remaining region will be referred to as "a second region A2." Also for convenience of illustration, a dotted line space which indicates the first region A1 and the second region A2 is expressed slightly larger so that drawing lines do not overlap and are not confused with each other. However, those skilled in the art may understand that a height of the first region A1 corresponds to a length L1 of a first section S1 of the first tape 150 and a width W2 of the second tape 160 and a width of the second region A2 corresponds to a width W1 of a second section S2 of the first tape 150 with reference to the following description.

Referring to FIGS. 2 and 3, the first tape 150 is formed to extend along the side portion of the case 120 in the second region A2 with the substantially constant width W1 and decrease in the width W1 in the first region A1 such that overlap with the second tape 160 is avoided. In other words, the first tape 150 includes the first section S1 located in the first region A1 and the second section S2 located in the second region A2. The second section S2 is formed throughout the front surface F, the transition portion T, and the side surface S of the case 120, but the first section S1 is not formed in the front surface F of the case 120 and is formed only in the transition portion T and the side surface S of the case 120.

The first section S1 and the second section S2 of the first tape 150 may be integrally formed.

The second tape 160 extends with a width W2 corresponding to the length L1 of the first section S1 of the first tape 150. The second tape 160 may extend over the front surface F of the case 120 and terminate at the transition portion T of the case 120 or may extend over the transition portion T of the case 120 and terminate at the side surface S of the case 120. As a result, the first tape 150 and the second tape 160 do not overlap in the first region A1 and the front surface F of the case 120. Thus, there is no increase in an overall thickness of the secondary battery 100 due to overlapping of the first and second tapes 150 and 160. In addition, since the first tape 150 and the second tape 160 in the first region A1 overlap on the transition portion T of the case 120 or on the side surface S of the case 120, insulation continuity may be guaranteed.

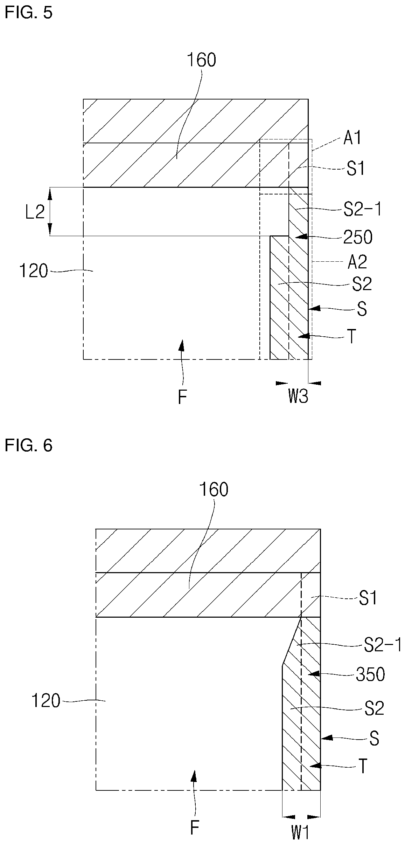

FIG. 5 relates to a secondary battery according to a second embodiment of the present disclosure and illustrates a portion corresponding to FIG. 2.

There is a difference in that the overlap avoidance configuration was applied only to the first section S1 of the first tape 150 in the secondary battery 100 according to the first embodiment of the present disclosure described in relation to FIG. 2. But, in the second embodiment, an overlap avoidance configuration is also applied to a partial sub-section S2-1 of a second section S2 of a first tape 250 adjacent to a first section S1 in the secondary battery.

Since all other items are substantially the same as those of the secondary battery 100 according to the first embodiment of the present disclosure, repetitive description thereof will be omitted, and hereinafter, the description will focus on the above-described difference.

Referring to FIG. 5, in the secondary battery according to the second embodiment of the present disclosure, the first tape 250 includes the first section S1 located in the first region A1 and the second section S2 located in the second region A2. The first section S1 is not formed on a front surface F of a case 120 and is formed only on a transition portion T and a side surface S of the case 120.

The second section S2 is entirely formed throughout the front surface F, the transition portion T, and the side surface S of the case 120. But the partial sub-section S2-1 of the first tape 250 adjacent to the first section S1 is not formed on the front surface F of the case 120 and is formed only on the transition portion T and the side surface S of the case 120 like the first section S1.

The sub-section S2-1 may have a length L2 of 1 to 3 times a width W3 of the transition portion T of the case 120 when the front surface F of the case 120 is viewed orthogonally.

Accordingly, since the sub-section S2-1 provides a free space, even when the first tape 250 or a second tape 160 is attached somewhat inaccurately during a manufacturing process, it may be ensured that the first tape 250 and the second tape 160 in the first region A1 do not overlap on the front surface F of the case 120.

FIG. 6 relates to a secondary battery according to a third embodiment of the present disclosure, and illustrates a portion corresponding to the portion illustrated in FIG. 2.

In comparison with the secondary battery according to the second embodiment of the present disclosure described with reference to FIG. 5, the secondary battery according to the third embodiment of the present disclosure has a difference in that a width W1 of a partial sub-section S2-1 of a second section S2 of a first tape 350 adjacent to a first section S1 gradually decreases toward the first section S1.

In FIG. 5, an example in which the sub-section S2-1 has a straight form is described, but the sub-section S2-1 may also have a curved form. Accordingly, a problem in that the first tape 350 may be easily torn due to stress concentration when the width sharply decreases from the sub-section S2-1 may be prevented.

Since all other items are substantially the same as those of the secondary battery according to the second embodiment of the present disclosure, repetitive description thereof will be omitted.

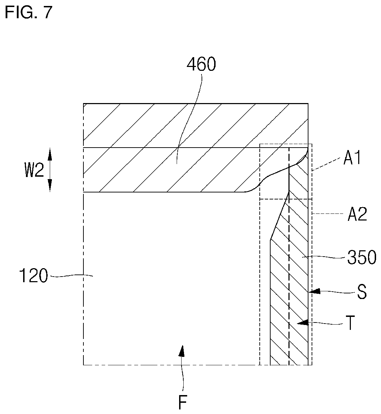

FIG. 7 relates to a secondary battery according to a fourth embodiment of the present disclosure and illustrates a portion corresponding to the portion illustrated in FIG. 2.

There is a difference in that the overlap avoidance configuration was applied only to the first tape 350 in the secondary battery according to the third embodiment of the present disclosure described with reference to FIG. 6. But the overlap avoidance configuration is also applied to a second tape 460 in the secondary battery according to the fourth embodiment of the present disclosure.

Since all other items are substantially the same as those of the secondary battery according to the third embodiment of the present disclosure, repetitive description thereof will be omitted, and hereinafter, the description will focus on the above-described difference.

Referring to FIG. 7, in the secondary battery according to the fourth embodiment of the present disclosure, the overlap avoidance configuration is applied to the first tape 350 in the same manner as described above.

The second tape 460 is formed to entirely extend along an upper portion of the case 120 with a substantially constant width W2 and then decrease in the width W2 in the first region A1. The second tape 460 may extend over a front surface F of the case 120 and terminate at a transition portion T of the case 120, or the second tape 460 may extend over the transition portion T of the case 120 and terminate at a side surface S of the case 120. Accordingly, as the overlap avoidance configuration is applied to not only the first tape 350 but also the second tape 460, it may be more reliably ensured that the first tape 350 and the second tape 460 do not overlap in the first region A1 or on the front surface F of the case 120.

The secondary battery according to the fourth embodiment of the present disclosure was described as a combination of the first tape 350 of the same form as the secondary battery according to the third embodiment of the present disclosure and application of the overlap avoidance configuration to the second tape 460. As additional embodiments, a combination of the first tape 150 of the same form as the secondary battery 100 according to the first embodiment of the present disclosure and application of the overlap avoidance configuration to the second tape, a combination of the first tape 250 of the same form as the secondary battery according to the second embodiment of the present disclosure and application of the overlap avoidance configuration to the second tape, and the like may be further considered. All of these combinations are within the scope of the technical spirit of the present disclosure.

According to the present disclosure, a secondary battery capable can be provided without an increased overall thickness due to tape overlapping when a first tape and a second tape are respectively attached to a side portion and an upper portion of a pouch-type case, as the first tape and the second tape are formed not to overlap in a region corresponding to an upper corner of the case, specifically on a front surface of the case.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

## Claims

1. A secondary battery (100) comprising:
an electrode assembly (110);
a pouch-type case (120) accommodating the electrode assembly (110);
a first tape (150, 250, 350) attached to a side portion of the case (120); and
a second tape (160, 460) attached to an upper portion of the case (120),
wherein the first tape (150, 250, 350) and the second tape (160, 460) do not overlap in part in a region (A1) corresponding to an upper corner of the case (120).

2. The secondary battery (100) of claim 1, wherein the first tape (150, 250, 350) extends along the side portion of the case (120) with a constant width (W1) and decrease in the width (W1) in the region (A1).

3. The secondary battery (100) of claim 1, wherein the case (120) includes a wide and flat front surface (F), a narrow and flat side surface (S), and a transition portion (T) configured to connect the front surface (F) and the side surface (S), and
wherein the first tape (150, 250, 350) and the second tape (160, 460) do not overlap in the region (A1) on the front surface (F) of the case (120.

4. The secondary battery (100) of claim 1, wherein the case (120) includes a wide and flat front surface (F), a narrow and flat side surface (S), and a transition portion (T) connecting the front surface (F) and the side surface (S), and
wherein the first tape (150, 250, 350) and the second tape (160, 460) overlap in the region on the transition portion (T) of the case (120).

5. The secondary battery (100) of claim 1, wherein the case (120) includes a wide and flat front surface (F), a narrow and flat side surface (S), and a transition portion (T) connecting the front surface (F) and the side surface (S), and
wherein the first tape (150, 250, 350) and the second tape (160, 460) overlap in the region on the transition portion (T) and the side surface (S) of the case (120).

6. The secondary battery (100) of claim 1, wherein the case (120) includes a wide and flat front surface (F), a narrow and flat side surface (S), and a transition portion (T) connecting the front surface (F) and the side surface (S), and
wherein the first tape (150, 250, 350) includes (i) a first section (S1) located in the region (A1) and throughout the transition portion (T) and the side surface (S) of the case (120) and (ii) a second section (S2) located outside the region (A1) and throughout the front surface (F), the transition portion (T), and the side surface (S) of the case (120).

7. The secondary battery (100) of claim 6, wherein the first section (S1) and the second section (S2) of the first tape (150, 250, 350) are integrally formed.

8. The secondary battery (100) of claim 6, wherein the second tape (160, 460) extends with a width corresponding to a length of the first section (S1) of the first tape (150, 250, 350).

9. The secondary battery (100) of claim 6, wherein a partial sub-section (S2-1) of the second section (S2) of the first tape (150, 250, 350) adjacent to the first section (S1) is formed only in the transition portion (T) and the side surface (S) of the case (120).

10. The secondary battery (100) of claim 6, wherein a partial sub-section (S2-1) of the second section (S2) of the first tape (150, 250, 350) adjacent to the first section (S1) is formed so that a width of the partial sub-section (S2-1) gradually decreases toward the first section (S1) of the first tape (150, 250, 350).

11. The secondary battery (100) of claim 9 or 10, wherein the partial sub-section (S2-1) has a length of 1 to 3 times a width of the transition portion (T) of the case (120).

12. The secondary battery (100) of claim 1, wherein the first tape (150, 250, 350) is formed to extend along the side portion of the case (120) with a constant width (W1) and decrease in the width (W1) in the region (A1), and
wherein the second tape (160, 460) is formed to extend along the upper portion of the case (120) with a constant width (W2) and then decrease in the width (W2) in the region (A1).

13. The secondary battery (100) of claim 1, wherein the case (120) includes a wide and flat front surface (F), a narrow and flat side surface (S), and a transition portion (T) connecting the front surface (F) and the side surface (S), and
wherein the region (A1) is within 10% of an overall length of the front surface (F) of the case (120).

14. The secondary battery (100) of claim 1, wherein the case (120) includes a wide and flat front surface, a narrow and flat side surface, and a transition portion connecting the front surface and the side surface, and
wherein the second tape (160, 460) extends over the front surface of the case (120) and terminates at the transition portion of the case (120).

15. The secondary battery (100) of claim 1, wherein the case (120) includes a wide and flat front surface (F), a narrow and flat side surface (S), and a transition portion (T) connecting the front surface (F) and the side surface (S), and
wherein the second tape (160, 460) extends over the front surface (F) and the transition portion (T) of the case (120) and terminates at the side surface (S) of the case (120).
